Europäisches Patentamt

European Patent Office

Office européen des brevets

(11) Veröffentlichungsnummer: **0 472 250 A2**

# (12) EUROPÄISCHE PATENTANMELDUNG

(21) Anmeldenummer: **91250200.2**

(22) Anmeldetag: **18.07.91**

(51) Int. Cl.⁵: **C02F 3/10, C12N 11/04, C02F 3/30, C02F 3/34**

(30) Priorität: **24.08.90 DE 4027222**

(43) Veröffentlichungstag der Anmeldung:
**26.02.92 Patentblatt 92/09**

(84) Benannte Vertragsstaaten:
**DE DK FR GB IT NL**

(71) Anmelder: **Preussag Noell Wassertechnik GmbH**
**Alfred-Nobel-Strasse 20**
**W-8700 Würzburg 1(DE)**

(72) Erfinder: **Wildenauer, Franz Xaver, Dr.**
**Dorfstrasse 1b**
**W-2861 Ritterhude(DE)**
Erfinder: **Menzel, Roman, Dr.**
**Ouellenweg 10**
**W-4450 Lingen(DE)**
Erfinder: **Vetter, Helmut**
**Oslebshauser Heerstrasse 156**
**W-2800 Bremen 21(DE)**
Erfinder: **Vorlop, Klaus-Dieter, Dr.**
**Hochstrasse 7**
**W-3300 Braunschweig(DE)**
Erfinder: **Remmers, Peter**
**Lessingplatz 6**
**W-3300 Braunschweig(DE)**

(74) Vertreter: **Kaiser, Henning**
**SALZGITTER AG Patente und Lizenzen**
**Kurfürstendamm 32 Postfach 15 06 27**
**W-1000 Berlin 15(DE)**

(54) **Verfahren zur Eliminierung von Phosphat aus Wasser.**

(57) Zur biologischen Eliminierung von Phosphat aus Wasser oder Abwasser werden perlenförmige Biokatalysatoren mit polymerfixierten Mikroorganismen eingesetzt. Die Biokatalysatoren werden aus einer Lösung von Polyvinylalkohol und Mikroorganismen in Wasser durch Eintropfen und schockartiges Tiefgefrieren in einem tiefkalten flüssigen Medium sowie anschließendes langsames Auftauen der gebildeten Perlen erzeugt, die hierdurch elastisch verformbar und sehr stabil werden. Die Behandlung des Wassers oder Abwassers durch die Biokatalysatoren erfolgt in einem Reaktor unter Zusatz von Sauerstoff sowie von geeigneten, Kohlenstoff enthaltenden Verbindungen.

Es werden Mikroorganismen verwendet, die Phosphat bis zu etwa 20 % ihres Trockengewichtes speichern können. Sind die Biokatalysatoren weitgehend beladen, erfolgt eine Regenerierung dadurch, daß kein weiteres Wasser und keine Luft mehr in den Reaktor zugeführt wird und hierdurch Phosphat aus den Biokatalysatoren in das Wasser wieder austritt. Dieses Wasser mit einer höheren Konzentration an Phosphat wird abgelassen und aus ihm Calciumphosphat ausgefällt. Die eingesetzten perlenförmigen Biokatalysatoren sind abriebfest und mechanisch stabil und können daher über eine Vielzahl von Zyklen verwendet werden.

Die Erfindung bezieht sich auf ein Verfahren zur Eliminierung von Phosphat aus Wasser mittels als Biokatalysatoren eingesetzter Mikroorganismen.

Die Entfernung von Phosphat aus Abwässern industrieller oder kommunaler Herkunft durch biologische Akkumulation ist durch spezifische Bakterienarten möglich. Diese Bakterien sind in der Lage, in Gegenwart von Sauerstoff und geeigneten Kohlenstoffquellen Phosphationen bis zu 20 % ihres Trockengewichtes zu speichern. Bei ausreichender Organismendichte werden so beispielsweise 20 - 30 % des im kommunalen Abwasser enthaltenen Phosphats entfernt. In Abwesenheit von Sauerstoff und/oder Nitrat bzw. Nitrit, die ebenfalls biologische Sauerstoffspender sind, scheiden Mikroorganismen das zuvor aufgenommene Phosphat wieder aus. Auch hierbei müssen geeignete Kohlenstoffquellen den Mikroorganismen zur Verfügung stehen.

Bisher war es nur möglich, die im Belebtschlamm anwesenden, Phosphat speichernden Bakterien zu nutzen, indem Belebtschlamm anaeroben Bedingungen ausgesetzt und anschließend aus überstehendem Wasser das Phosphat ausgefällt wurde. Dieses Verfahren ist jedoch sehr unsicher, weil sich die Konzentration der Phosphat speichernden Bakterien im Belebtschlamm nicht beeinflussen läßt. Häufig wurden die Bakterien bei höheren Raumbelastungen ausgespült. Weiterhin wurden Kohlenstoffquellen auch von konkurrierenden, unerwünschten, nicht Phosphat speichernden Bakterien verbraucht. Das notwendige Umpumpen des Belebtschlammes ist zudem aufwendig und teuer, und schließlich werden benötigte Beckenvolumina bedingt durch die geringe Konzentration der Phosphat speichernden Bakterien im Belebtschlamm sehr groß.

Aufgabe der vorliegenden Erfindung ist es, geeignete Mikroorganismen als Akkumulatoren für Phosphat in einer Weise in Polymeren zu fixieren, die eine gute Vermischung mit dem zu behandelnden Wasser und eine Einstellung optimaler Bedingungen für die Mikroorganismen sowie deren mehrfache Beladung mit Phosphat ermöglicht.

Zur Lösung dieser Aufgabe werden aus einem Gel bestehende, perlenförmige Biokatalysatoren eingesetzt, die geeignete Mikroorganismen polymerfixiert enthalten. Die Biokatalysatoren werden aus einer Lösung von bis zu 150 g Polyvinylalkohol und bis zu 400 g geeignete Mikroorganismen je 1 Liter Wasser dadurch gebildet, daß die Lösung in ein tiefkaltes flüssiges Medium eingetropft und plötzlich tiefgefroren wird. Die hierbei entstehenden kugel- oder perlenförmigen Körper werden langsam aufgetaut, und zwar im Temperaturbereich -20 °C bis 5 °C mit einer Erwärmungsgeschwindigkeit bis zu 20 °C/h. Hierbei entstehen elastisch verformbare stabile Perlen von hoher Abriebfestigkeit, die lange Zeit in einem Blasenreaktor oder Rührgefäß zirkulieren können. Diese Biokatalysatoren werden unter Zusatz von Sauerstoff mit dem zu behandelnden Wasser in einem Behandlungsraum vermischt. Vorzugsweise wird ein Behandlungsraum gewählt, durch den Wasser während der Eliminierung von Phosphat kontinuierlich strömt, in dem aber die perlenförmigen Biokatalysatoren zurückgehalten werden.

In einer bevorzugten Ausführung der Erfindung wird ein Polyvinylalkohol mit einem Polymerisierungsgrad über 1200 und einem Hydrolysegrad von mindestens 98 % in einer Menge von 70 - 100 g auf ein Liter Wasser verwendet. Diese hochviskose Lösung wird in eine Flüssigkeit von unter -30 °C eingetropft, vorzugsweise in flüssigen Stickstoff. Das Auftauen erfolgt insbesondere im Temperaturbereich von -5 °C bis +5 °C mit einer Erwärmungsrate von nicht mehr als 4 °C/h. Der Durchmesser der Perlen liegt zwischen 2 und 5 mm.

Der Lösung, aus der die Perlen gebildet werden, kann Glyzerin oder Zucker bis zu 40 Gew.% zugesetzt werden. Hierdurch wird die Elastizität der Perlen noch erhöht. Der Zucker kann zugleich eine Kohlenstoffquelle für die Mikroorganismen darstellen.

Das zu behandelnde Wasser wird zweckmäßigerweise vorher von Schlamm und Schwebestoffen weitgehend befreit. Soweit in ihm als Kohlenstoffquellen geeignete Verbindungen nicht mehr in ausreichendem Maße vorhanden sind, ist es vorteilhaft, dem Wasser flüchtige Fettsäuren wie Essigsäure oder Buttersäure oder Alkohole wie Methanol und Ethanol oder Zucker bzw. Glukose oder Melasse zuzugeben. Mittels Überwachung des pH-Wertes und seiner Korrektur durch Zugabe von Säure oder Lauge sowie einem Zusatz von Spurenelementen und gegebenenfalls einer Einstellung der Temperatur werden Bedingungen erzeugt, die der biologischen Aktivität der speziellen im Biokatalysator eingeschlossenen Mikroorganismen förderlich sind.

In dem Biokatalysator werden Mikroorganismen polymerfixiert, die Phosphat zu wenigstens 5 % und möglichst bis zu 20 % oder mehr ihres Trockengewichtes speichern können. Geeignete Mikroorganismen sind beispielsweise Acinetobacter calcoaceticus, Klebsiella pneumonia, Microthrix spec, Bacillus cereus, Pseudomonas spec, Citrobacter freundii, Aeromonas spec, Moracella spec.

Die Behandlung des Wassers oder Abwassers erfolgt zweckmäßigerweise in einem als Reaktor ausgebildeten Behandlungsraum. Der Reaktor kann offen oder geschlossen ausgeführt sein. An ihm sind Einrichtungen zur Zuführung von Luft oder Sauerstoff in das Wasser vorhanden. Der Behälter kann ein Rührwerk aufweisen, das eine gute Durchmischung von Wasser und Biokatalysatoren ermöglicht. Geeignet ist auch eine Blasensäule. Bevorzugt wird eine Blasensäule, die durch interne oder externe Strömungsschlaufen eine gute Mischung von Wasser und Katalysatorperlen erzeugt. Der Reaktor wird vorzugsweise kontinuierlich von dem zu behandelnden Wasser durchflossen. Er besitzt daher Einrichtungen zur Zurückhaltung der perlenförmigen Biokatalysatoren. Es können ein oder mehrere Reaktoren vorgesehen sein, durch die das Wasser nacheinander fließt. In diesem Fall ist es zweckmäßig, jeden der Reaktoren durch eine Bypass-Schaltung vorübergehend aus dem Betrieb nehmen zu können.

Steigt die Phosphatkonzentration im Ablauf eines Reaktors an, weil die in den Biokatalysatoren aufgenommene Menge von Phosphat sich ihrem Höchstwert nähert, oder nach einem diesen Vorgang erfahrungsgemäß entsprechenden Zeitabschnitt wird die Wasserzufuhr zu dem jeweiligen Reaktor unterbrochen und die Belüftung abgestellt. Hierdurch kommt es zur Freisetzung von Phosphat aus den Biokatalysatoren. Nimmt die Phosphatkonzentration in dem im ausgeschalteten Reaktor befindlichen Wasser nicht weiter zu, wird das phosphathaltige Wasser in ein Fällungs- und Absetzbecken abgeleitet. Danach wird der Reaktor erneut mit Wasser oder Abwasser beschickt. In dem Fällungsbecken, in dem sich das Wasser mit der höheren Konzentration von Phosphat befindet, werden die gelösten Phosphationen durch Zugabe von vorzugsweise Kalkmilch als Calciumphosphat ausgefällt. Das gefällte und abgesetzte Calciumphospat kann entnommen und mittels einer Filterpresse entwässert werden.

Durch die erfindungsgemäße Anwendung von in perlenförmigen Biokatalysatoren polymerfixierten Mikroorganismen mit der Fähigkeit unter Sauerstoffeinfluß Phosphat aus Wasser aufzunehmen und wenigstens vorübergehend zu speichern, ist eine gezielte und kontrollierbare Anwendung der biologischen Eliminierung von Phosphat aus Oberflächenwasser, Grundwasser und insbesondere aus Abwasser verschiedener Qualität möglich. Da bei ruhendem Betrieb des Reaktors die Biokatalysatoren das Phosphat in Wasser abgeben, können Sie in einer Vielzahl von Zyklen beladen und anschließend wieder regeneriert werden. Die angegebene Herstellung der Biokatalysatoren ist an sich ein einfaches und preiswertes Verfahren, so daß nicht in jedem Falle eine Regeneration notwendig ist.

Insbesondere wenn eine Regeneration erfolgen soll, ist es zweckmäßig, in dem Wasser den Gehalt an Sauerstoff und an Sauerstoff abgebenden Stickstoffverbindungen soweit wie möglich herabzusetzen. Hierzu können auch andere Biokatalysatoren eingesetzt werden. So ist es vorzugsweise möglich, Denitrifikanten neben den Phosphat speichernden Mikroorganismen in die perlenförmigen Biokatalysatoren einzuschließen oder in einem Reaktor Biokatalysatoren, die Phosphat speichern, und solche, die Denitrifikanten enthalten, zu verwenden. Im letzten Fall brauchen die Denitrifikanten nur während der Regenerationszeit im Reaktor anwesend zu sein.

**Patentansprüche**

1. Verfahren zur Eliminierung von Phosphat aus Wasser mittels als Biokatalysatoren eingesetzter Mikroorganismen, dadurch gekennzeichnet, daß perlenförmige Biokatalysatoren, die geeignete Mikroorganismen in einem Gel polymerfixiert enthalten, eingesetzt werden,
   die Biokatalysatoren aus einer Lösung bis zu 150 g Polyvinylalkohol und bis zu 400 g Mikroorganismen je 1 Liter Wasser durch Eintropfen in ein flüssiges Medium, dessen Temperatur unter -30 $^\circ$C liegt, plötzlich tiefgefroren und anschließend zur Ausbildung elastisch verformbarer, stabiler Perlen mit einer Erwärmungsgeschwindigkeit von bis zu 20 $^\circ$C/h wenigstens im Temperaturbereich von -20 $^\circ$C bis 5 $^\circ$C aufgetaut werden
   und diese Biokatalysatoren unter Zusatz von Sauerstoff mit dem zu behandelnden Wasser vermischt werden,
   das einen Behandlungsraum, in dem die Biokatalysatoren zurückgehalten werden, kontinuierlich durchströmen.

2. Verfahren nach Anspruch 1, dadurch gekennzeichnet, daß der Polyvinylalkohollösung bis zu 40 Gew.% Zucker zugesetzt werden.

3. Verfahren nach Anspruch 1 oder 2, dadurch gekennzeichnet, daß dem zu behandelnden Wasser Kohlenstoffquellen wie Zucker, flüchtige Fettsäuren oder Alkohole und/oder Spurenelemente zugesetzt werden, die die biologische Aktivität der Mikroorganismen erhöhen.

4. Verfahren nach einem der Ansprüche 1 bis 3, dadurch gekennzeichnet, daß in dem zu behandelnden Wasser durch Zugabe von Säure oder Lauge ein für die Mikroorganismen optimaler pH-Wert eingestellt wird.

5. Verfahren nach einem oder mehreren der Ansprüche 1 bis 4, dadurch gekennzeichnet, daß Mikroorganismen verwendet werden, die Phosphat zu wenigstens 5 und möglichst bis wenigstens 20 % ihres Trockengewichtes speichern können.

6. Verfahren nach Anspruch 5, dadurch gekennzeichnet, daß Arten und Species wie Acinetobacter calcoaceticus, Klebsiella pneumonia, Microthrix spec, Bacillus cereus, Pseudomonas spec, Citrobacter freundii, Aeromonas spec, Moracella spec in den Biokatalysatoren eingesetzt werden.

7. Verfahren nach Anspruch 5 oder 6, dadurch gekennzeichnet, daß die Mikroorganismen in geeigneten Fermenten gezüchtet und vor ihrer Zugabe zu der Polyvinylalkohollösung durch Zentrifugierung aufkonzentriert werden.

8. Verfahren nach einem oder mehreren der Ansprüche 1 bis 7, mit einem als Reaktor ausgebildeten Behandlungsraum für durchfließendes Wasser und Einrichtungen zur Einleitung von Luft oder Sauerstoff, dadurch gekennzeichnet, daß nach einer wenigstens teilweisen Beladung der Biokatalysatoren mit Phosphat die Zuleitung von Wasser und Luft in den Reaktor unterbrochen wird und eine Freisetzung des Phosphats aus den Biokatalysatoren in das im Reaktor verbliebene Wasser erfolgt, das mit Phosphat angereicherte Wasser abgelassen und die Phosphationen vorzugsweise als Calciumphosphat ausgefällt werden.

9. Verfahren nach Anspruch 8, dadurch gekennzeichnet, daß wenigstens während der Regenerierung der Phosphat speichernden Biokatalysatoren in dem Behandlungsraum andere perlenförmige Biokatalysatoren anwesend sind, die als Denitrifikanten wirkende Mikroorganismen enthalten.

10. Verfahren nach einem oder mehreren der Ansprüche 1 bis 9, dadurch gekennzeichnet, daß in den perlenförmigen Biokatalysatoren neben dem Phosphat speichernden Mikroorganismen auch Denitrifikanten eingeschlossen sind.